# EUROPÄISCHE PATENTANMELDUNG

(11) **EP 1 637 377 A2**
(43) Veröffentlichungstag der Anmeldung: **22.03.2006**
(21) Anmeldenummer: 05017715.3
(22) Anmeldetag: 16.08.2005
(51) Int. Cl.: B60J 7/04, B60J 7/16, B62D 33/02

(54) **Vorrichtung zum Anheben und zum Absenken eines Daches eines Nutzfahrzeugaufbaus**

(30) Priorität: 20.09.2004 DE 202004014744 U
(71) Anmelder: F. HESTERBERG & SÖHNE GmbH & Co. KG, 58256 Ennepetal (DE)
(72) Erfinder: Tiedtke, Henning, 58256 Ennepetal (DE); Feldmeier, Frank, 58093 Hagen (DE)
(74) Vertreter: Spannagel, Hans-Achim

(57) **Zusammenfassung**

Vorrichtung zum Anheben und Absenken eines über Rungen (1) abgestützten Daches eines Nutzfahrzeugaufbaus, mit einer im oberen Rungenbereich angeordneten Führung (2), in der ein Hubglied (3) mit Dachanbindung auf und ab beweglich geführt ist, einer sich an die Führung (2) anschließenden Verlängerung (4), einem Dämpfungselement (5), das zwischen der Führung (2) und der Verlängerung (4) vorgesehen ist sowie einer im unteren Bereich der Verlängerung (4) angeordneten Arretiereinrichtung (6), die mittel- oder unmittelbar mit dem Hubglied (3) zusammenwirkt, wobei die Verlängerung (4) und zumindest ein Teilbereich der Arretiereinrichtung (6) als ineinanderliegende bzw. ineinanderlegbare Profile (4) ausgebildet sind und eines der Profile über Arretierungslöcher (13) verfügt, in welche mit dem anderen Profil zusammenwirkende Rastmittel (10) eingreifen.

## Beschreibung

Die Erfindung betrifft eine Vorrichtung zum Anheben und Absenken eines über Rungen abgestützten Daches eines Nutzfahrzeugaufbaus.

Planengestelle von Nutzfahrzeugaufbauten besitzen nicht nur Eckrungen als Stützen für das Dachgestell, sondern an den Längsseiten des Fahrzeugs bzw. Anhängers auch mittlere Rungen, die vom Fahrzeugrahmen abgekoppelt und seitlich verschoben werden können, wenn sie bei der Beladung des Fahrzeuges/Anhängers im Weg sind. Um die volle Höhe des Laderaumes unter dem Planengestell vollständig nutzen sowie leichter beladen zu können, gibt es höhenverstellbare Planengestelle, deren Eckrungen teleskopartig verlängerbar sind, beispielsweise durch hydraulische oder pneumatische Mittel, um somit das Dach des Planengestells anzuheben. Daraus folgt, dass auch die mittleren als Hängerungen ausgebildete Rungen ebenfalls verlängerbar sein sollten, damit ein Anheben des Daches des Planengestells ermöglicht wird.

Durch das DE-Gbm 298 16 833 ist eine Hängerunge für höhenverstellbare Planengestelle von Nutzfahrzeugaufbauten bekannt geworden, beinhaltend eine Rollenanordnung an ihrer Oberseite, mittels der sie auf einer über die Seitenkante des Fahrzeugs verlaufenden Schiene mit dem Planengestell seitlich verschiebbar ist und mit einer Befestigungsvorrichtung, mittels der sie am Rahmen des Fahrzeugaufbaus verriegelbar ist, wobei die Runge aus zwei teleskopartig ineinander geschobenen Komponenten besteht und eine Federung aufweist, die die Runge in der verkürzten Stellung zu halten versucht, wobei die Federung aus einem Dämpfungselement (Spanngummi, Gasdruckfeder oder dergleichen) besteht, die mit je einem Ende an einer der teleskopartig aneinander geschobenen Komponenten der Runge befestigt ist.

Vielfach hat es sich als problematisch dargestellt, dass beim teleskopartigen Anheben des die Rollenanordnung beinhaltenden Laufwagens das elastische Dämpfungselement, beispielsweise Spanngummi, nicht genügend Rückstellkräfte aufwies. Dies im Hinblick auch auf alterungsbedingtes Nachlassen der Spannkraft.

Ziel des Erfindungsgegenstandes ist es, eine Vorrichtung zum Anheben und Absenken eines über Rungen abgestützten Daches eines Nutzfahrzeugaufbaus dahingehend weiterzubilden, dass einerseits die Sicherheit beim Anheben und Absenken der teleskopierbaren Bauteile erhöht wird. Andererseits soll eine Fixierung des Hubgliedes in vorgebbaren Hubstellungen möglich sein.

Dieses Ziel wird erreicht durch eine Vorrichtung zum Anheben und Absenken eines über Rungen abgestützten Daches eines Nutzfahrzeugaufbaus, mit einer im oberen Rungenbereich angeordneten Führung, in der ein Hubglied mit Dachanbindung auf und ab beweglich geführt ist, einer sich an die Führung anschließenden Verlängerung, einem Dämpfungselement, das zwischen der Führung und der Verlängerung vorgesehen ist sowie einer im unteren Bereich der Verlängerung angeordneten Arretiereinrichtung, die mittel- oder unmittelbar mit dem Hubglied zusammenwirkt, wobei die Verlängerung und zumindest ein Teilbereich der Arretiereinrichtung als ineinanderliegende bzw. ineinanderlegbare Profile ausgebildet sind und eines der Profile über Arretierungslöcher verfügt, in welche mit dem anderen Profil zusammenwirkende Rastmittel eingreifen.

Vorteilhafte Weiterbildungen des Erfindungsgegenstandes sind den Unteransprüchen zu entnehmen.

Mit dem Erfindungsgegenstand ist es nun möglich, ein Anheben und Absenken der teleskopierbaren Bauteile herbeizuführen, ohne dass es zu Sicherheitsproblemen kommt, da die jeweils mit den Rastmitteln versehene Arretiereinrichtung in jedem Fall in die mit einem vorgegebenen übereinander angeordneten Lochprofil versehenen Arretierlöcher eingreift und erst durch manuelle Betätigung der Arretiereinrichtung, respektive der Rastmittel, wieder aus selbigen entfernbar sind.

Der Erfindungsgegenstand bringt darüber hinaus den Vorteil mit sich, dass im Verlauf des vorgegebenen Hubweges des Hubgliedes unterschiedlichste Hubstellungen in arretierter, d.h. gesicherter Weise, eingestellt werden können, wobei sich das Hubglied auf einer durch die jeweilige Arretiereinrichtung gebildeten Anschlagfläche abstützt.

Der Erfindungsgegenstand offenbart mehrere Versionen einer Arretiereinrichtung. Zum einen kann die Arretiereinrichtung integraler Bestandteil der Runge und zum anderen durch ein separates Bauteil gebildet sein, das manuell von der Bedienperson bei Erreichen der gewünschten Hubhöhe des Hubgliedes, in den Bereich der Verlängerung eingebracht wird, bzw. deren Rastmittel im Bereich der Verlängerung festgelegt werden.

Bei Anheben des Fahrzeugdaches können sich die vorhandenen Rungen mittels ihrer teleskopartig ausfahrbaren Hubglieder ebenfalls längen. Zur einwandfreien Beladung wird eine Hubhöhe von etwa 400 mm vorgegeben. Das Fahrzeugdach wird nach dem Be- oder Entladevorgang abgesenkt und für den Fahrbetrieb die normale Fahrzeughöhe wieder eingestellt. Möchte der Fahrer jedoch mit erhöhter Dachstellung fahren (z.B. 50 mm), so muss er die Arretierstellung des Fahrzeugdaches - wie in den Ansprüchen angegeben - um die gewünschten Einrastpositionen im Bereich der Rungen verändern.

Der Erfindungsgegenstand ist anhand eines Ausführungsbeispieles in der Zeichnung dargestellt und wird wie folgt beschrieben. Es zeigen:
- Figur 1: Prinzipskizze einer Hängerunge in verschiedenen Ansichten und Schnitten mit integrierter, in Außerbetriebsstellung befindlicher Arretiereinrichtung;
- Figur 2: Bild gemäß Figur 1 mit in Betrieb befindlicher Arretiereinrichtung;
- Figur 3: Teilansicht gemäß Figur 1 mit Einzeldarstellung der Arretiereinrichtung;
- Figur 4: Perspektivische Darstellung gemäß Figur 1 samt Einzeiteildarstellung der Arretiereinrichtung;
- Figur 5: Teildarstellung der Arretiereinrichtung samt Arretiertaste;
- Figur 6: Alternative nicht integrierte Arretiereinrichtung in verschiedenen Ansichten;
- Figur 7: Prinzipskizze der Anordnung der alternativen Arretiereinrichtung gemäß Figur 6 in verschiedenen Arretierpositionen.

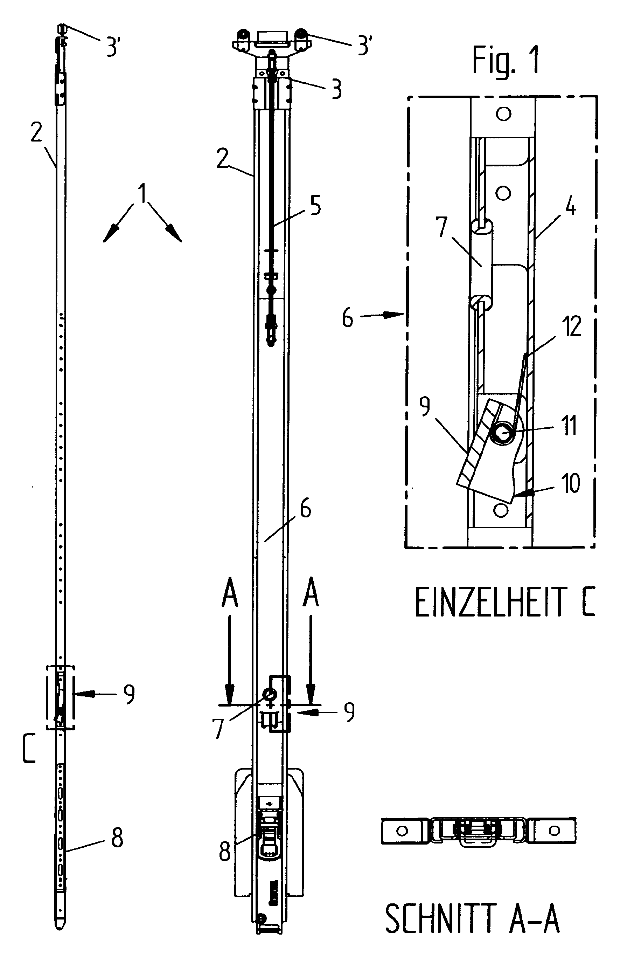

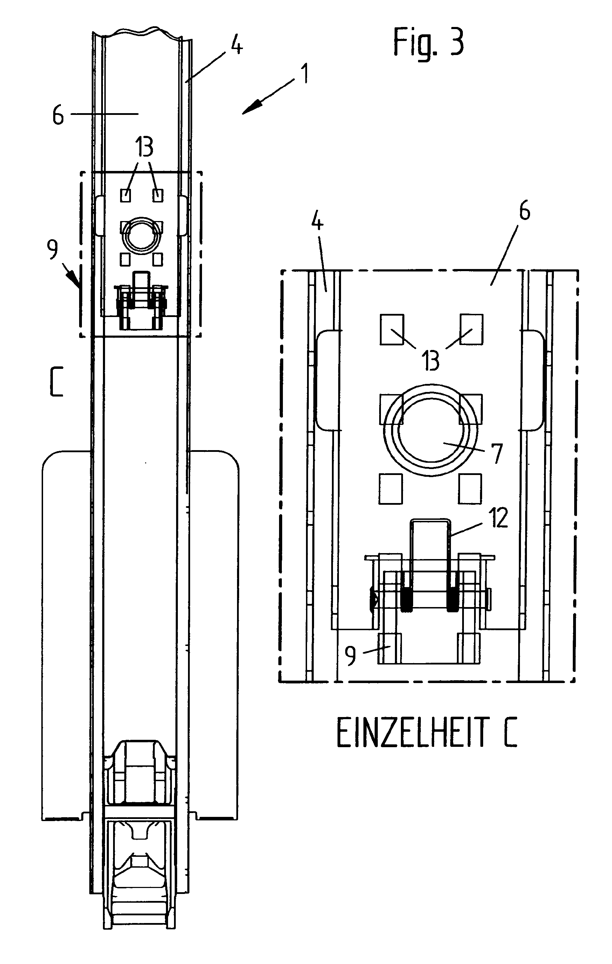

Figur 1 zeigt in verschiedenen Ansichten, Schnitten und Einzelteildarstellungen eine als Hängerunge ausgebildete Runge 1, die im wesentlichen folgende Bauteile beinhaltet: eine Führung 2, innerhalb derer ein Hubglied 3 in Form eines teleskopierbaren Laufwagens samt Laufrollen 3' angeordnet ist, der die Dachanbindung an einen nicht weiter dargestellten Nutzfahrzeugaufbau ermöglicht, eine sich an die Führung 2 anschließende Verlängerung 4, ein in diesem Beispiel als Spanngummi ausgebildetes elastisch wirkendes Dämpfungselement 5, das zwischen der Führung 2, respektive dem Hubglied 3 und der Verlängerung 4, vorgesehen ist sowie einer im unteren Bereich der Verlängerung 4 angeordneten, in vertikaler Richtung betätigbaren länger ausgebildeten Arretiereinrichtung 6 zur Betätigung und zur Abstützung des Hubgliedes 3. Die Verlängerung 4 sowie die Arretiereinrichtung 6 sind als ineinander liegende Profile ausgebildet, wobei die Verlängerung 4 einen C-förmigen und die Arretiereinrichtung 6 einen U-förmigen Querschnitt aufweist. Die Arretiereinrichtung 6 verfügt über ein Eingriffsloch 7 für die Bedienperson. Der untere Bereich 8 der Runge 1 wird in üblicher Weise im Bodenbereich, d.h. am Rahmen, des Nutzfahrzeugaufbaus festgelegt und verriegelt. Die Arretiereinrichtung 6 wirkt mit einer integrierten Arretiertaste 9 zusammen, die unterhalb des Eingriffloches 7 vorgesehen ist. Die Arretiertaste 9 beinhaltet in diesem Beispiel als Rastmittel dienende Stützfüße 10 und ist um eine Schwenkachse 11 beweglich sowie über ein Federelement 12 vorspannbar. Figur 1 zeigt die Arretiertaste 9 in einer Nichtbetriebsstellung, so dass eine Verschiebung der Arretiereinrichtung 6 relativ zur Verlängerung 4 möglich ist. Die hier nicht dargestellten Arretierungslöcher 13, die übereinander angeordnet sind und in verschiedenen Hubstellungen des Hubgliedes 3 eine sichere Arretierung des Hubgliedes 3 in der jeweiligen Position gewährleisten, sind in Figur 3 erkennbar.

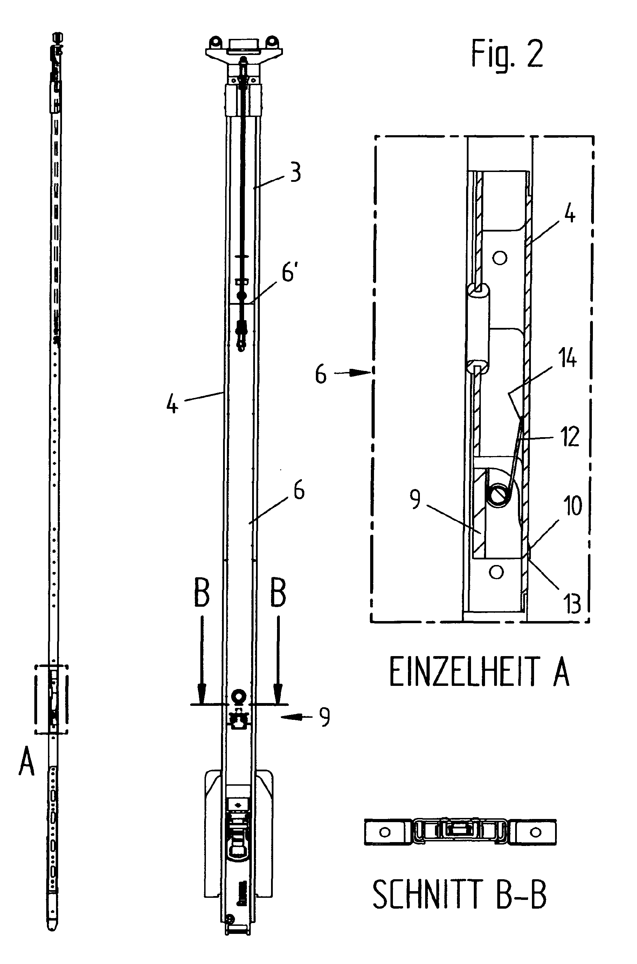

Figur 2 zeigt das Bild gemäß Figur 1, jedoch mit eingerasteter Arretiertaste 9. Erkennbar ist, dass die Stützfüße 10 im Bereich zugeordneter Arretierungslöcher 13, aufgrund der vorgespannten Feder 12, eingerastet sind. In dieser Position ist eine Bewegung der Arretiereinrichtung 6, relativ zur Verlängerung 4 nach unten, nicht mehr möglich. Das Hubglied 3 stützt sich hierbei auf einer Anschlagfläche 6' der Arretiereinrichtung 6 ab. Eine Relativbewegung des Hubgliedes 3 ist erst dann möglich, wenn die Stützfüße 10 der Arretiertaste 9 manuell aus den zugehörigen Arretierungslöchern 13 herausgedrückt wurden. Das Federelement 12 stützt sich auf dem gegenüberliegenden längeren Schenkel 14 der Verlängerung 4 ab.

Figur 3 zeigt den unteren, die Arretiertaste 9 beinhaltenden Teilbereich der Runge 1 gemäß Figur 1 samt Einzelheit C, die die Arretiertaste 9 betrifft. Die Einzelheit C zeigt die Verlängerung 4 samt darin eingebrachten Arretierungslöchern 13 und der darin geführten Arretiereinrichtung 6. Ebenfalls dargestellt ist die Arretiertaste 9 samt Federelement 12 sowie das Eingriffsloch 7.

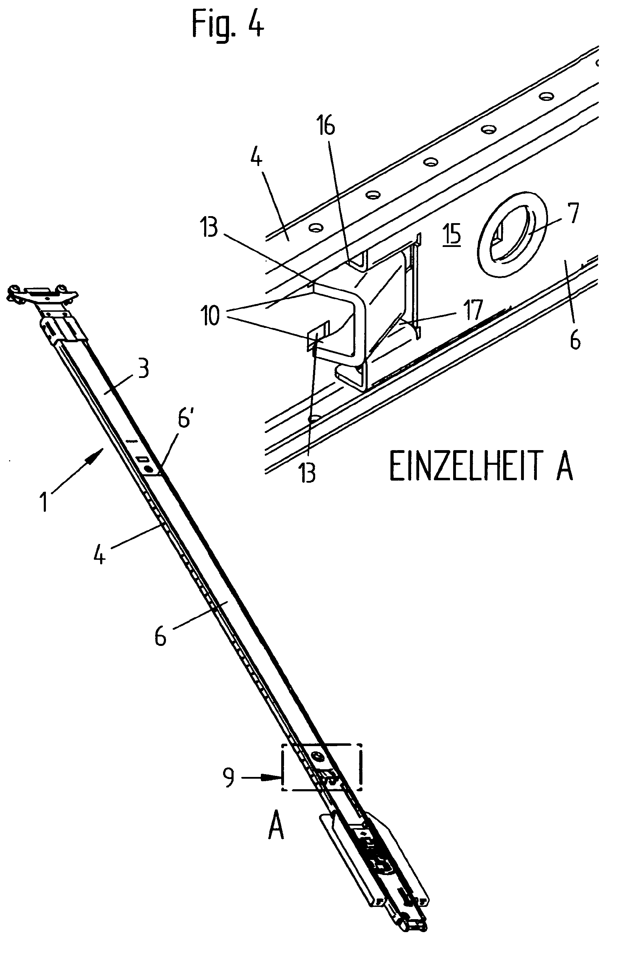

Figur 4 zeigt in perspektivischer Darstellung die Runge 1 gemäß Figur 1 samt Einzelheit A. Die Einzelheit A betrifft wiederum die Arretiertaste 9, die im unteren Bereich der Arretiereinrichtung 6 vorgesehen ist. Ferner erkennbar ist das teleskopierbare Hubglied 3, das in der dargestellten Position auf der Anschlagfläche 6' der Arretiereinrichtung 6 aufliegt. In diesem Beispiel sind aus dem längeren Schenkel 15 der Arretiereinrichtung 6 Profile 16,17 herausgeformt und 90° zum Schenkel 15 abgebogen, die Aufnahmebereiche für die mit den Stützfüßen 10 versehene Arretiertaste 9 bilden. Erkennbar sind die im Bereich der Verlängerung 4 vorgesehenen Arretierungslöcher 13. Die Stützfüße 10, respektive die Arretiertaste 9, befinden sich nicht im Eingriff, so dass eine Relativbewegung der Arretiereinrichtung 6 gegenüber der Verlängerung 4 möglich ist. Ferner erkennbar ist das Eingriffsloch 7 im Bereich der Arretiereinrichtung 6, das bedarfsweise durch ein elastisches Material ausgekleidet sein kann, um Verletzungen beim Eingriff der Bedienperson zu verhindern.

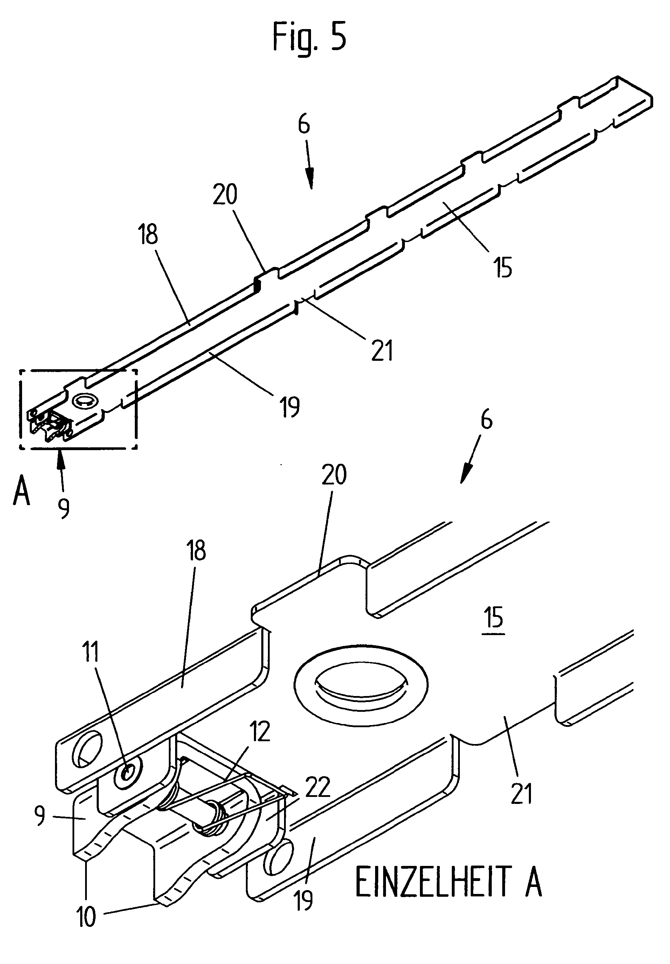

Figur 5 zeigt als Teildarstellung die als längeres Bauteil ausgebildete Arretiereinrichtung 6, die mit einem U-förmigen Querschnitt versehen ist. In vorgebbaren Abständen sind aus den kürzeren Schenkeln 18,19 des U-Profils Flügel 20,21 herausgeschnitten und in die Ebene des längeren Schenkels 15 der Arretiereinrichtung 6 umgebogen. Als Einzelheit A ist die in der Arretiereinrichtung 6 integrierte Arretiertaste 9 erkennbar. In diesem Beispiel wird die Arretiertaste 9, die auch hier mit Stützfüßen 10 versehen ist und mit einem Federelement 12 zusammenwirkt, von einem separaten U-förmig ausgebildeten Trägerelement 22, das mit dem Schenkel 15 der Arretiereinrichtung 6 verbunden ist, aufgenommen. Die Schwenkbewegung der Arretiertaste 9 erfolgt um deren Schwenkachse 11.

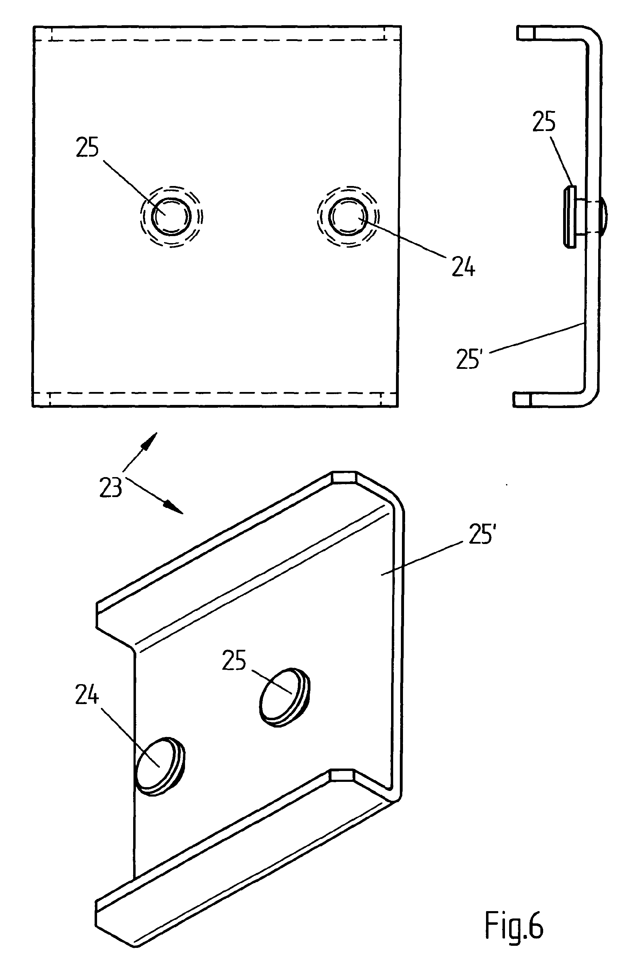

Figur 6 zeigt in verschiedenen Ansichten eine alternative durch ein separates kurz bauendes Bauteil gebildete Arretiereinrichtung 23 mit einem U-förmigen Querschnitt. Die Arretiereinrichtung 23 ist mit asymmetrisch angebrachten etwa pilzartig ausgebildeten als Rastmittel dienenden Ansätzen 24,25 versehen, die an ihrer Innseite 25' vorgesehen sind.

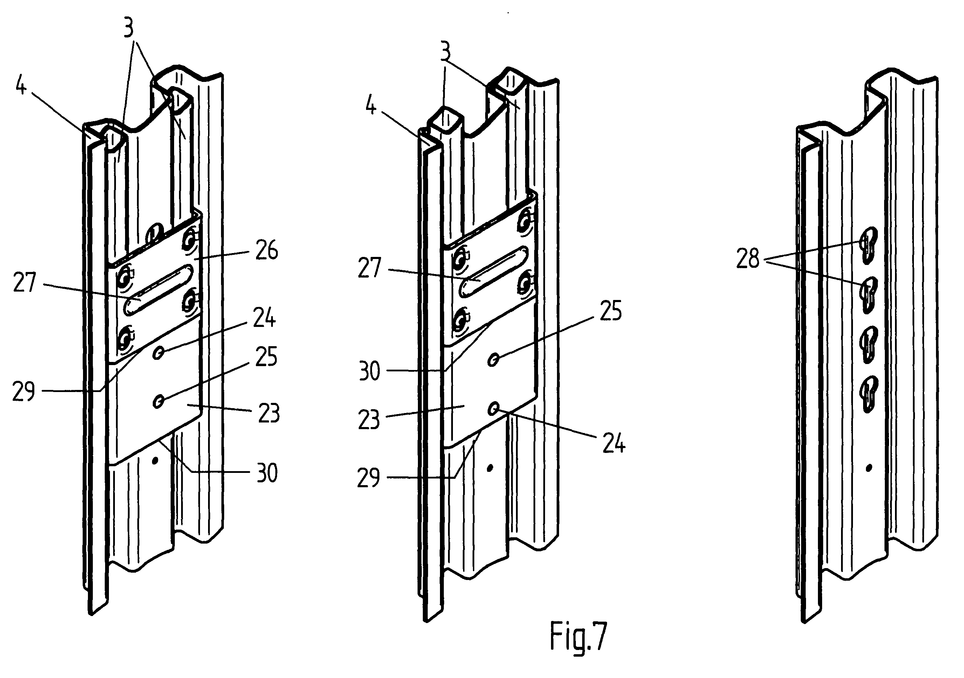

Figur 7 zeigt den Einsatz der alternativen Arretiereinrichtung 23. Dargestellt ist ein unteres Anschlagblech 26, das das untere Ende eines Teleskoplaufwagens (Hubglied 3 gemäß Figur 1) bildet und mit einer Versteifungssicke versehen ist, so dass eine Bewegung Hubgliedes 3 relativ zur Verlängerung 4 möglich ist. Die in diesem Beispiel durch ein Profil mit M-förmigen Querschnitt gebildete Verlängerung 4 ist mit einem an die pilzförmigen Ansätze 25 angepassten, Arretierungslöcher 28 bildenden, Lochbild versehen, in welches die Ansätze 24,25 der Arretiereinrichtung 23 einbringbar sind. Die pilzartigen Ansätze 24,25 sind mit einem verdickten Kopfbereich und einem dünneren Schaft versehen. Die Bedienperson kann somit mit einer Hand die separate Arretiereinrichtung 23 dergestalt in die zugehörigen Arretierungslöcher 28 einbringen, dass sie vom Querschnitt her ein Einbringen des Kopfes der Ansätze 24,25 ermöglichen und im unteren Bereich den Schaft der Ansätze 24,25 führen. Infolge der asymmetrischen Anordnung der Ansätze 24,25, bezogen auf die Stirnseiten 29,30 der Arretiereinrichtung 23, sind nun verschiedene Hubhöhen des Hubgliedes 3 dadurch realisierbar, dass die Arretiereinrichtung 23 um 180° geschwenkt wird. Dies ist im linken und mittleren Bild der Figur 7 erkennbar, wo der Ansatz 24 einmal oben und einmal unten vorgesehen ist. In der jeweiligen Arretierstellung des Hubgliedes 3 ruht das Anschlagblech 26 auf einer durch die jeweilige Stirnfläche 29 bzw. 30 gebildeten Anschlagfläche der separaten Arretiereinrichtung, wodurch das Hubglied 3 in dieser Position nicht weiter abgesenkt werden kann.

Im Folgenden wird die Betätigung der in den Figuren 1 bis 7 dargestellten höhenverstellbaren Rungenarretierung kurz erläutert:

Ein Fahrzeugdach wird mittels einer Dachhöhen-Verstelleinrichtung im Bereich der Eckrungen hochgestellt, wobei das Hubglied 3 der Mittelrungen 1 automatisch mit ausfährt. Die jeweilige Arretiereinrichtung 6,23 wird über ihre Rastmitel 9,24,25 in eine andere Lochposition 13,28 gebracht. Das Fahrzeugdach wird anschließend mittels der Dachhöhen-Verstelleinrichtung wieder abgesenkt. Das jeweilige Teleskopteil 3 der Mittelrungen 1 läuft bis zum Anschlag 6',29,30 der jeweiligen Arretiereinrichtung 6,23. Die jeweilige Runge 1 ist nun entsprechend länger und ist in dieser neuen Position fixiert, wobei ein weiteres Absenken des Hubgliedes 3 nicht möglich ist. Mittels der Seitenplane (Verbindung zwischen Dachgurt und Fahrzeugaußenrahmen) wurden die Eck- und Mittelrungen durch Verspannung in dieser Position gehalten.

### Bezugszeichenliste

- 1: Runge
- 2: Führung
- 3: Hubglied
- 3': Laufrollen
- 4: Verlängerung
- 5: Dämpfungselement
- 6: Arretiereinrichtung, lang
- 6': Anschlagfläche
- 7: Eingriffsloch
- 8: unterer Bereich
- 9: Arretiertaste
- 10: Stützfüße
- 11: Schwenkachse
- 12: Federelement
- 13: Arretierungslöcher

- 14: längerer Schenkel der Verlängerung
- 15: längerer Schenkel der Arretiereinrichtung
- 16: Profil
- 17: Profil
- 18: kürzerer Schenkel
- 19: kürzerer Schenkel
- 20: Flügel
- 21: Flügel
- 22: Trägerelement
- 23: alternative Arretiereinrichtung, kurz
- 24: Ansatz
- 25: Ansatz
- 25': Innenseite
- 26: Anschlagblech
- 27: Versteifungssicke
- 28: Lochbild/Arretierungslöcher
- 29: Stirnseite, Anschlag
- 30: Stirnseite, Anschlag

## Patentansprüche

1. Vorrichtung zum Anheben und Absenken eines über Rungen (1) abgestützten Daches eines Nutzfahrzeugaufbaus, mit einer im oberen Rungenbereich angeordneten Führung (2), in der ein Hubglied (3) mit Dachanbindung auf und ab beweglich geführt ist, einer sich an die Führung (2) anschließenden Verlängerung (4), einem Dämpfungselement (5), das zwischen der Führung (2) und der Verlängerung (4) vorgesehen ist sowie einer im unteren Bereich der Verlängerung (4) angeordneten Arretiereinrichtung (6,23), die mittel- oder unmittelbar mit dem Hubglied (3) zusammenwirkt, wobei die Verlängerung (4) und zumindest ein Teilbereich der Arretiereinrichtung (6,23) als ineinanderliegende bzw. ineinanderlegbare Profile ausgebildet sind und eines der Profile (4) über Arretierungslöcher (13,28) verfügt, in welche mit dem anderen Profil (6,23) zusammenwirkende Rastmittel (10,24,25) eingreifen.

2. Vorrichtung nach Anspruch 1, **dadurch gekennzeichnet, dass** die Arretiereinrichtung (6,23) einen U-förmigen Querschnitt aufweist.

3. Vorrichtung nach Anspruch 1 oder 2, **dadurch gekennzeichnet, dass** die Arretiereinrichtung (6) integraler Bestandteil der Runge (1) ist.

4. Vorrichtung nach einem der Ansprüche 1 bis 3, **dadurch gekennzeichnet, dass** die Verlängerung (4) mit mindestens einem übereinander angeordneten, Arretierungslöcher (13,28) bildenden, Lochbild vorgebbarer Kontur versehen ist.

5. Vorrichtung nach einem der Ansprüche 1 bis 4, **dadurch gekennzeichnet, dass** eine im Bereich der Verlängerung (4) geführte separate Arretiereinrichtung (23) an ihrer Innenseite (25') mit asymmetrisch angeordneten Ansätzen (24,25) versehen ist.

6. Vorrichtung nach einem der Ansprüche 1 bis 5, **dadurch gekennzeichnet, dass** die Verlängerung (4) durch ein C- oder M-förmig ausgebildetes Profil gebildet ist, innerhalb dessen die Arretiereinrichtung (6,23) geführt bzw. festlegbar ist, wobei Anschlagflächen (6',29,30) für das Hubglied (3) gebildet sind.

7. Vorrichtung nach einem der Ansprüche 1 bis 6, **dadurch gekennzeichnet, dass** die Arretiereinrichtung (6) eine in ihrem unteren Bereich um eine Achse (11) schwenkbar gelagerte, mit einem Federelement (12) zusammenwirkende, Arretiertaste (9) beinhaltet.

8. Vorrichtung nach einem der Ansprüche 1 bis 7, **dadurch gekennzeichnet, dass** die Arretiertaste (9) über nebeneinander liegende Stützfüße (10) verfügt, die in arretierter Position ein Absenken des Hubgliedes (3) verhindern, in nicht eingerasteter Position ein im wesentlichen stufenloses Anheben des Hubgliedes (3) ermöglichen.

9. Vorrichtung nach einem der Ansprüche 1 bis 8, **dadurch gekennzeichnet, dass** die Arretiertaste (9) im Bereich eines im Querschnitt U-förmig ausgebildeten Trägerelementes (22) um die Achse (11) schwenkbar gelagert ist, dass das Federelement (12) zwischen den beabstandeten Stützfüßen (10) vorgesehen ist, und dass sich das Federelement (12) im Einbauzustand am gegenüberliegenden längeren Schenkel (14) der Verlängerung (4) unter Vorspannung abstützt.

10. Vorrichtung nach einem der Ansprüche 1 bis 9, **dadurch gekennzeichnet, dass** die Arretiereinrichtung (6) über aus ihrem U-Profil herausgeschnittene und abgebogene Flügel (20,21) verfügt, die in der Ebene ihres längeren Schenkels (15) vorgesehen sind.

11. Vorrichtung nach einem der Ansprüche 1 bis 10, **dadurch gekennzeichnet, dass** die Arretiereinrichtung (6) mit mindestens einem Eingriffsloch (7) für die Bedienperson versehen ist.
